Europäisches Patentamt

European Patent Office

Office européen des brevets

(19)

(11)  EP 1 032 823 B1

(12)  **EUROPEAN PATENT SPECIFICATION**

(45) Date of publication and mention
     of the grant of the patent:
     **07.05.2003  Bulletin 2003/19**

(21) Application number: **98941181.4**

(22) Date of filing: **27.08.1998**

(51) Int Cl.[7]: **G01N 21/77**, A62B 18/08

(86) International application number:
     **PCT/CA98/00820**

(87) International publication number:
     **WO 99/027352 (03.06.1999 Gazette 1999/22)**

(54)  **END-OF-SERVICE INDICATOR FOR A RESPIRATOR CARTRIDGE**

ERSCHÖPFUNGSANZEIGE FÜR DIE FILTERPATRONE EINES ATEMSCHUTZGERÄTS

INDICATEUR DE FIN DE SERVICE D'UNE CARTOUCHE RESPIRATOIRE

(84) Designated Contracting States:
     **DE FR GB IT**

(30) Priority:  **21.11.1997  CA 2219854**

(43) Date of publication of application:
     **06.09.2000  Bulletin 2000/36**

(73) Proprietors:
     • **Institut National d'Optique**
       **Sainte-Foy, Quebec G1P 4N8 (CA)**
     • **INSTITUT DE RECHERCHE EN SANTE**
       **ET EN SECURITE DU TRAVAIL DU QUEBEC**
       **Montreal Québec H3A 3C2 (CA)**

(72) Inventors:
     • **BERNARD, Pierre**
       **Saint-Augustin-de-Desmaures, Quebec G3A**
       **(CA)**
     • **CARON, Serge**
       **Quebec, Quebec G1R 1J8 (CA)**

     • **ST-PIERRE, Marco**
       **Val-Bélair, Quebec G3K 2A7 (CA)**
     • **LARA, Jaime**
       **Montreal, Quebec H3L 2J3 (CA)**

(74) Representative: **Jacobson, Claude et al**
     **Cabinet Lavoix**
     **2, Place d'Estienne d'Orves**
     **75441 Paris Cedex 09 (FR)**

(56) References cited:
     **EP-A- 0 061 884        US-A- 4 146 887**
     **US-A- 4 846 548        US-A- 5 250 095**

     • **OGAWA K ET AL: "Humidity-sensing effects of**
       **optical fibres with microporous SiO/sub 2/**
       **cladding" ELECTRONICS LETTERS, 7 JAN.**
       **1988, UK, vol. 24, no. 1, pages 42-43,**
       **XP002084805 ISSN 0013-5194**

**Description**

## FIELD OF THE INVENTION

The present invention is directed to a respirator cartridge provided with an end-of-service indicator.

## DESCRIPTION OF THE PRIOR ART

Respirator cartridges, and devices which incorporate them, are among the most important security devices used to protect the health of workers. More than 10 million respirator cartridges are used each day in North America.

One of the critical elements related to efficient and safe use of these cartridges is their life span. In the case of gas and vapor pollutants, often the only indicator of the saturation of the cartridge is the odor of the pollutant. This is a dangerous indicator of the end of service of the cartridge since there are many pollutants whose olfactory detection level is below the Threshold Limit Value (TLV). For a user, it is desirable that the cartridge include an active indicator to indicate without ambiguity that the useful life of the cartridge has ended. In 1984, the National Institute for Occupational Safety and Health (NIOSH) published standards for the certification of active end-of-life indicators to encourage the development of such systems.

An active end-of-life indicator is known which is based on the use of polymer films containing carbon particles. The presence of soluble organic vapors causes a change in the resistance of the film and it is this element that is measured. Even after many years of efforts, these indicators are not up to par. There is a great variation in the characteristics from one element to another, the sensitivity must be increased and the stability of the reference level leaves something to be desired. Furthermore, since organic vapors have variable solubility coefficients, the response of the system is dependent of the vapors that are present.

A related field to the invention, the field of fiber optic chemical sensor (FOCS) is presently in expansion. One type of such a sensor is of the intrinsic type, that is to say that the fiber itself acts as a sensor and the light never leaves the fiber. More specifically, it is an FOCS where the transmission of light varies as a function of the index of refraction of the environment surrounding the core of the fiber. This type of FOCS has almost always been used to measure liquids, although an article published in Electronic Letters, vol. 24, p. 42 (1988) describes the use of an optical fiber having a porous cladding to measure humidity levels. In this case, the optical fiber is manufactured by depositing a porous glass soot on a pure silica fiber. The intensity of the transmitted light decreases by 60% when the relative humidity reaches 90%. In this case, the fiber is straight.

In the field of solvent or chemical products detection, many articles have been published but the vast majority use a spectroscopic approach in one form or another, i.e. the absence of a given wavelength indicates the presence of a solvent or chemical product. A combination of an end-of-service indicator and a respirator cartridge according to the preamble of claim 1 is disclosed in US-A-4 146 887.

The following U.S. patents are also of interest:

| 4,154,586 | Jones et al. | RESPIRATOR CARTRIDGE END-OF-SERVICE LIFT INDICATOR SYSTEM AND METHOD OF MAKING; |
|-----------|--------------|-------------------------------------------------------------------------------|
| 4,530,706 | Jones | RESPIRATOR CARTRIDGE END-OF-SERVICE LIFE INDICATOR; |
| 4,699,511 | Seaver | REFRACTION SENSOR; |
| 4,834,496 | Blyler, Jr. et al. | OPTICAL FIBER SENSORS FOR CHEMICAL DETECTION; |
| 4,846,548 | Klainer | FIBER OPTIC WHICH IS AN INHERENT CHEMICAL SENSOR; |
| 5,250,095 | Sigel, Jr. et al. | METHOD FOR MAKING POROUS GLASS OPTICAL FIBER SENSOR; |
| 5,280,548 | Atwater et al. | EMISSION BASED FIBER OPTIC SENSORS FOR PH AND CARBON DIOXIDE ANALYSIS; |
| 5,512,882 | Stetter et al. | CHEMICAL SENSING APPARATUS AND METHODS; |
| H1470 | Ewing et al. | REFRACTIVE INDEX-BASED SENSOR FOR THE DISCRIMINATION OF CHLORINATED HYDRO-CARBONS FROM GROUNDWATER. |

## SUMMARY OF THE INVENTION

It is an object of the present invention to provide an end-of-service indicator for a respirator cartridge that is universal, active, unambiguous and simple in its construction. In accordance with the invention, this object is achieved with a combination of an end-of-service indicator and a respirator cartridge, in accordance with claim 1. The end-of-service indicator comprises an optical fiber having two opposite extremities, one of the extremities being connected to a light source, the other of the extremities being connected to a detector which measures the intensity of light transmitted by the fiber. An alarm is operatively connected to the detector and is triggered when the intensity of light measured by the detector is below a predetermined level. At least a portion of the optical fiber is porous. In use, when the end-of-service indicator is placed inside a respirator cartridge having a gas/vapor sorbent, and the respirator cartridge is used in a toxic environment, the gas/vapor sorbent gradually becomes saturated, thereby lowering the transmission properties of the optical fiber and triggering the alarm.

## BRIEF DESCRIPTION OF THE DRAWINGS

The present invention and its advantages will be more easily understood after reading the following non-restrictive description of preferred embodiments thereof, made with reference to the following drawings, where:

Figure 1 is a graph showing the effective index of refraction of a porous region as a function of the fraction of the porous volume occupied by a solvent;

Figure 2 is a graph showing the fraction of the transmitted power as a function of the porous volume occupied by the solvent, where the transmitted power also depends on the radius of curvature (R) of the fiber;

Figure 3 is a longitudinal cross-section of an optical fiber having a portion of the cladding that is porous;

Figure 4 is a graph showing the percentage of transmitted power when the optical fiber of Fig. 3 is exposed to a humid environment;

Figure 5 is a graph showing the percentage of transmitted power when the optical fiber of Fig. 3 is exposed to acetone;

Figure 6 is a graph showing the percentage of transmitted power when the optical fiber of Fig. 3 is exposed to toluene, and as a function of the radius of curvature of the fiber;

Figure 7 is a graph showing the transmitted power as a function of the wavelength, without toluene and in the presence of toluene;

Figure 8 is a graph showing the ratio of the transmitted power without toluene over the transmitted power with toluene, as a function of the wavelength;

Figure 9a is a schematic representation of a detector circuit for use with the end-of-life indicator according to the invention;

Figure 9b is a schematic representation of the set-up used for the experimental results;

Figure 10 is a top plan view of the end-of-service indicator according to a preferred embodiment of the invention inserted in a respirator cartridge;

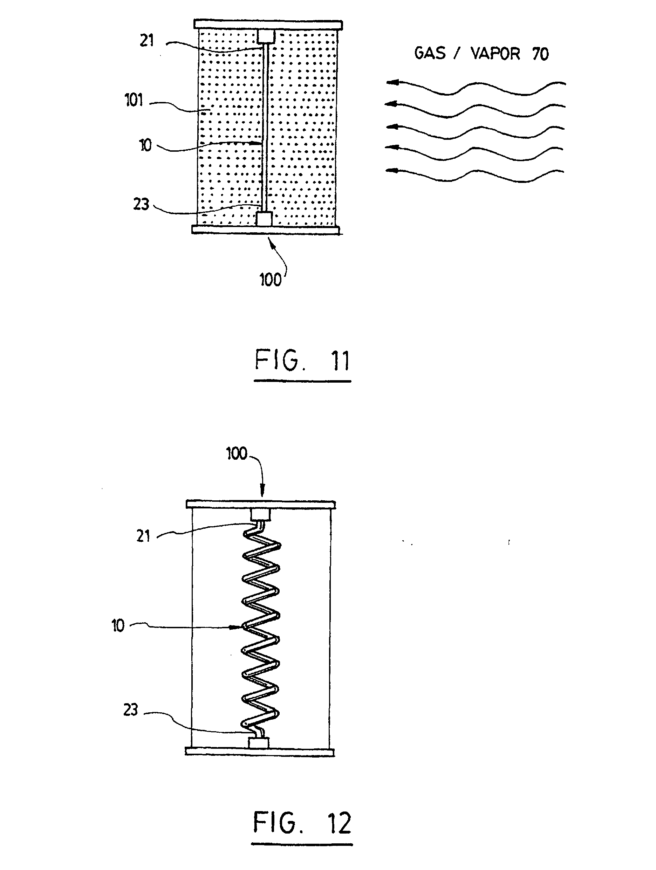

Figure 11 is a view taken along line XI-XI of Fig. 10; and

Figure 12 is an alternative side view of an end-of-service indicator according to another preferred embodiment of the invention.

## DESCRIPTION OF A PREFERRED EMBODIMENT OF THE INVENTION

The following description will initially review the basic principles and objects of the invention before describing a preferred embodiment thereof.

The basic principle of optical fiber transmission is based on the guiding of a light beam by total reflection. This total reflection is possible when the light beam is in a core of index $n_1$ surrounded by a cladding of index $n_2$, where $n_1$ is greater than $n_2$ and the angle of incidence of the light beam with respect to normal must be greater than a critical angle which is expressed by the relation as in $(n_2/n_1)$.

Many different configurations are possible to meet these criteria, i.e. the cladding and the core may be manufactured from glass or plastic having different indexes, the core may be glass and the cladding may simply be air and so on.

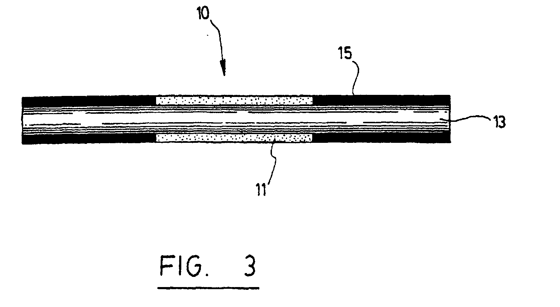

The optical fiber 10 used for the end-of-service indicator 1 according to the invention is manufactured from porous silica glass. The glass is stretched to obtain fibers of a desired diameter. These fibers are further chemically and thermically treated to transform a part or the whole of the glass into porous glass 11. This porous glass is a plurality of interconnected micro pores having a skeleton of silica glass. The dimension and the density of the pores may thus be partly controlled through thermal treatment. The final result is a fiber that is completely or totally porous or a fiber having a porous cladding 11 and a solid core 13 such as the one illustrated on Fig. 3. If necessary, a slight layer of polymer 15 may be applied on the exterior of the fiber. These processes are well known in the industry, and it should be understood that a critical aspect of the invention is that at least a portion of the optical fiber must be porous as shown on Fig. 3. Any type of porous fiber will meet the objectives of the invention, as long as the proper adjustments are made. In a preferred embodiment, the porous section 11 of the fiber has a length of approximately 2 cm.

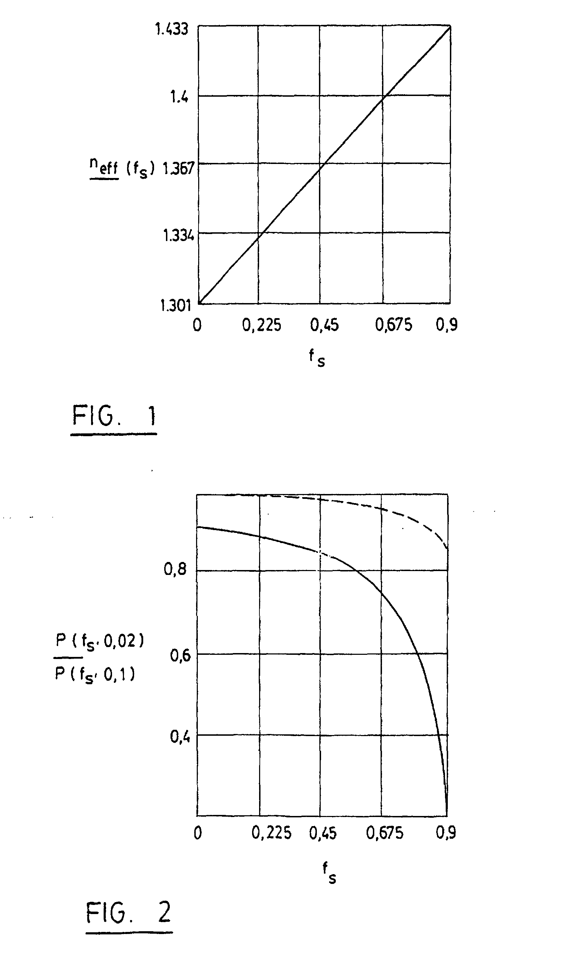

Porous glass has an index of refraction which is necessarily lower than that of solid glass and thus the guiding requirements are met. In the presence of gas and vapors, the pores absorb this gas and vapor and retain them. The more the pores are filled, the more the index of the porous glass increases. This change in index affects the guiding properties of the fiber and thus these guiding properties become an indication of the adsorption in the pores. Fig. 1 shows the effective index of refraction increase as a function of the volume of pores that is filled with a solvent where $n_{eff}$ is the effective refraction index of the fiber and $f_s$ is the function of porous volume occupied by the solvent.

The behaviour of the fiber 10 is also a function of the geometrical form of the fiber 10: length and curvature of the fiber 10. The longer the porous section 11 and the greater its curvature, the guiding losses will be increasingly sensitive to the effective index of the porous milieu. In such case, multi-turn fibers 10 of small radius can thus be manufactured and are more sensitive than a straight fiber. Fig. 2 shows how the transmitted power varies as a function of the volume of pores that is filled with a solvent and how this varies as a function of the radius R of curvature of the fiber.

The power transmitted can be expressed as:

$$P(f_s, R) = 1 \, \frac{2\frac{a}{R}}{1 - \left(\frac{n_{eff}(f_s)}{n_m}\right)^2}$$

where:

$f_s$ is the function of the porous volume occupied by the solvent;
R is the radius of curvature of the fiber;
a is the core radius of the optical fiber;
$n_{eff}$ in the effective index of refraction; and
$n_m$ is the refractive index of the silica matrix.

On this Fig. 2, the dotted line represents the power transmitted for a radius of curvature of 10 cm, whereas the solid line represents the power transmitted for a radius of curvature of 2 cm.

Optical fiber indicators as described above can thus be used as end-of-service indicators for respiratory cartridges, where the end-of-service indicator comprises an optical fiber 10 having two opposite extremities 21, 23, one 21 of the extremities being connected to a light source 31, the other extremity 23 being connected to a detector 41 which measures the intensity of light transmitted by the fiber. An alarm 51 is operatively connected to the detector 41 and triggered when the intensity of light (or power) measured by the detector 41 is below a predetermined level. The optical fiber 10 is characterized in that at least a portion of the fiber 10 is porous. In use, the end-of-service indicator 1' is placed inside a respirator cartridge 100 having a gas/vapor sorbent 101 so that when the respirator cartridge 100 is used in a toxic environment, the gas/vapor sorbent 101 gradually becomes saturated, thereby lowering the transmission properties of the optical fiber 10. The detector 41 and the light source 31 may be integrated to the fiber or to the electronic module 60. In this last case, optical fibers operatively connect the sensing fiber 10 to the electronic module 60. Various approaches are possible to interface the fiber 10 and the electronic module 60 and which are simple and economical. The fiber 10 itself costs almost nothing when manufactured in great quantities and may be discarded after usage. The electronic module 10 measures the intensity of the light transmitted by the fiber. If such a fiber is exposed to gas vapors 70, the pores of the cladding will fill up through adsorption. It is the same principle as for the activated carbon used in respiratory cartridges. The index of the cladding will increase as a function of the volume of pores that are saturated by the solvent. This increase of the index will finally affect the guiding properties of the fiber 10 and this effect is increasingly present when the curvature of the fiber is important. An increased curvature of the fiber diminishes the angle of incidence of the light beam and the guiding becomes more and more difficult. In practice, an important decrease of the light transmission is observed when the fibers are exposed to vapors of various solvents. Placing the fiber within the gas/vapor sorbent, which is usually activated carbon ensures that the indicator 1 will react only when the surrounding carbon is saturated. Other configurations are also possible. For example, to avoid throwing the indicator 1 out with each cartridge, the fiber 10 may be sandwiched between a disposable cartridge and a second cartridge which protects the indicator against excess humidity and which protects the user when the disposable cartridge fails.

When the porous fiber adsorbs sufficient gas or vapors, the transmission decreases under a pre-established threshold value and an audible or visual alarm is triggered.

Since the principle of the indicator resides in the phenomenon of adsorption and guiding losses, the indicator is not selective and works with all products susceptible of being absorbed by activated carbon. In fact, the indicator reacts when the porous glass is saturated - which happens when the activated carbon saturates.

Industry standards and practice require that an end-of-service indicated be able to warn the user when the cartridge has reached approximately ninety percent (90%) of its useful life. It must not interfere with the operation of the respiratory cartridge 100. The reference level and its sensitivity must remain stable for long periods of time and it must be responsive to a large array of gas and toxic vapors. Furthermore, to ensure its commercial success, the production costs must be very low and it must be easily integratable to respiratory cartridges that exist. Further, it is not necessary that the end of service indicator response be linear, although it must be precise and adjustable.

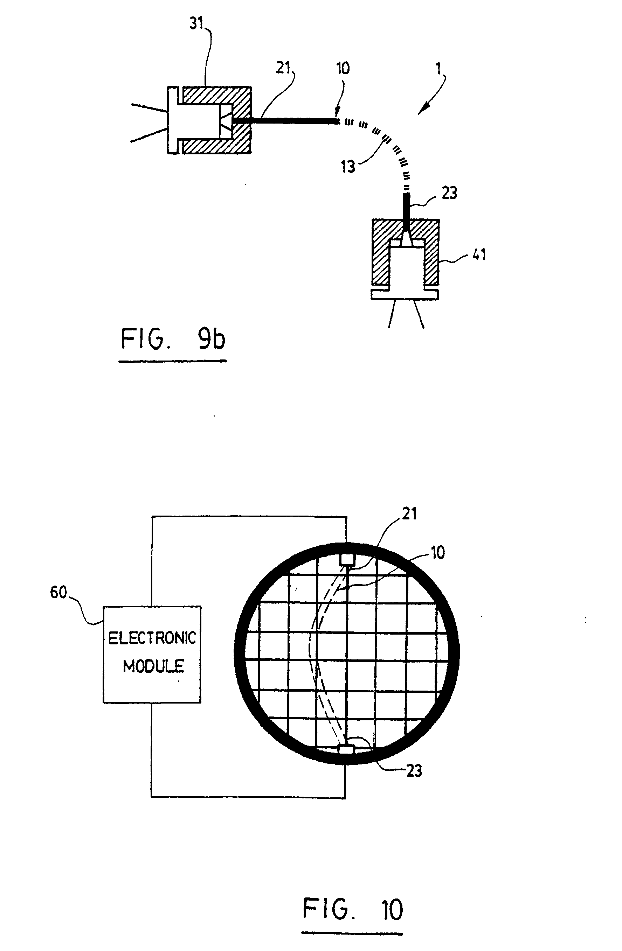

The experimental equipment used to evaluate performances of the indicator are illustrated on Figure 9b. The extremities 21, 23 of the fiber are mounted in small aluminum blocks which have the necessary openings to receive the fiber 10 and the detector 41 or the light source 31. It is important to note that the extremities of the fibers are used as is, i.e. without polishing or special preparation. There is no precision adjustment and the fiber is easily installed in the blocks in a few seconds. This fiber remains nonetheless relatively fragile and brittle.

The specifications of the fibers used for laboratory testing are the following:

- porous geometry: interconnective porosity as seen by SEM*;
- porous size distribution; 10 to 200A° as measured by BET*;
- ratio of core diameter to the porous clad diameter: flexible;
- fiber diameter: 200 and up microns;
- porosity: 50%;
- surface area: 250 $m^2$/gram of porous fiber;
- length of porous section: flexible;
- total length of fiber: 5mm to 10 cms and higher;
- porous cladding: silica glass;
- optical loss in the porous section due to scattering less than 1 dB/cm of porous section measured by integrating sphere techniques.

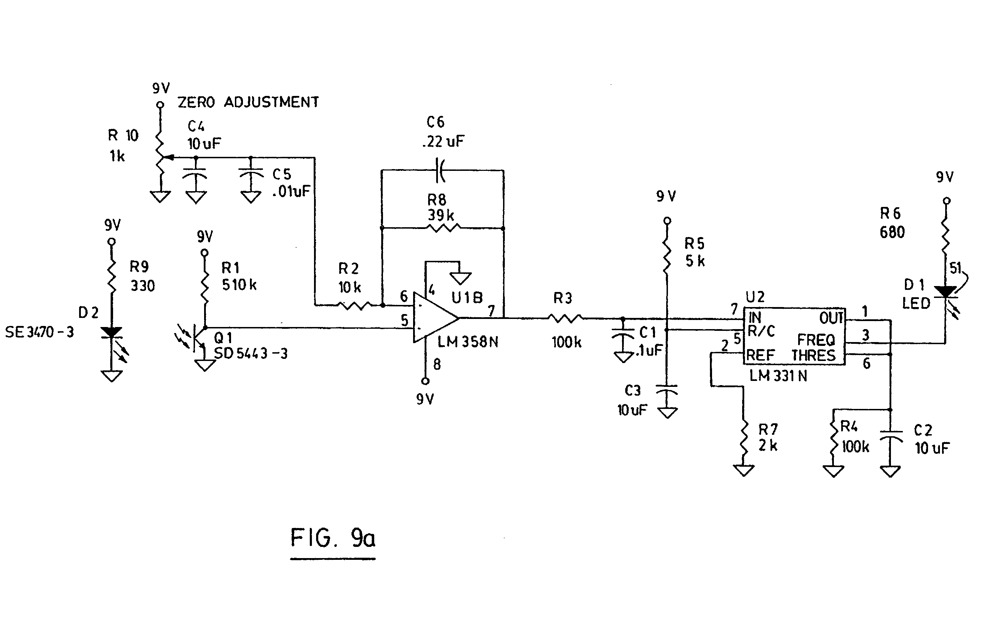

The electronics used for the experiment are shown on Fig. 9a, which is essentially an amplifier followed by a voltage-frequency converter, the latter controlling a LED.

The detector 41 used is a phototransistor (Q1) and the light source is an electrolight diode (D2) in the infrared region (800nm). These elements were chosen because they represent which is the most common in the area of electro-optical components. They are very cheap as they are used within devices of mass consumption, i.e. infrared remote control. The electronic circuit allows to feed the light source and measures the power transmitted by the fiber. The electronic card also includes a circuit which triggers a blinking LED (D1). The frequency of the blinking increases when the transmission of the fiber decreases. This allows to have visual indication of the state of the fiber. The electronics are supplied by a 9-volt battery. It should however be understood that any means for evaluating the transmission properties of the fiber will meet the objectives of the invention.

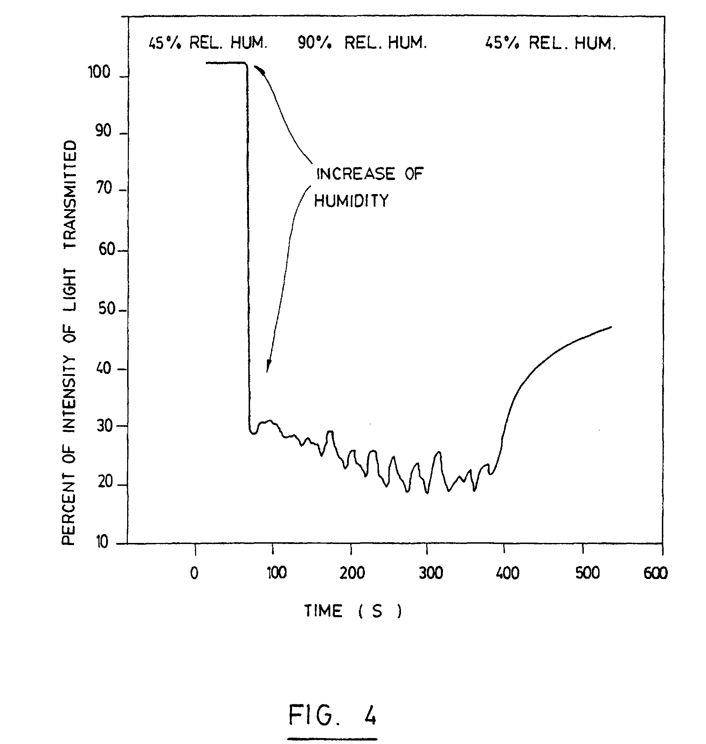

Figure 4 illustrates a first result obtained with the indicator. This graph shows the power transmitted by the fiber 10 when the indicators exposed to a humid environment of 90% relative humidity. For the purposes of this experiment, the indicator was placed in an environmental chamber with automatic control of the relative humidity. The oscillations of the signal at 90% relative humidity are caused by the system of the chamber which continually corrects the degree of humidity by very fine jets of water vapor. When the indicator is replaced into an atmosphere that is less humid, the signal recuperates, but very slowly. In this case, the desorption is a much slower process.

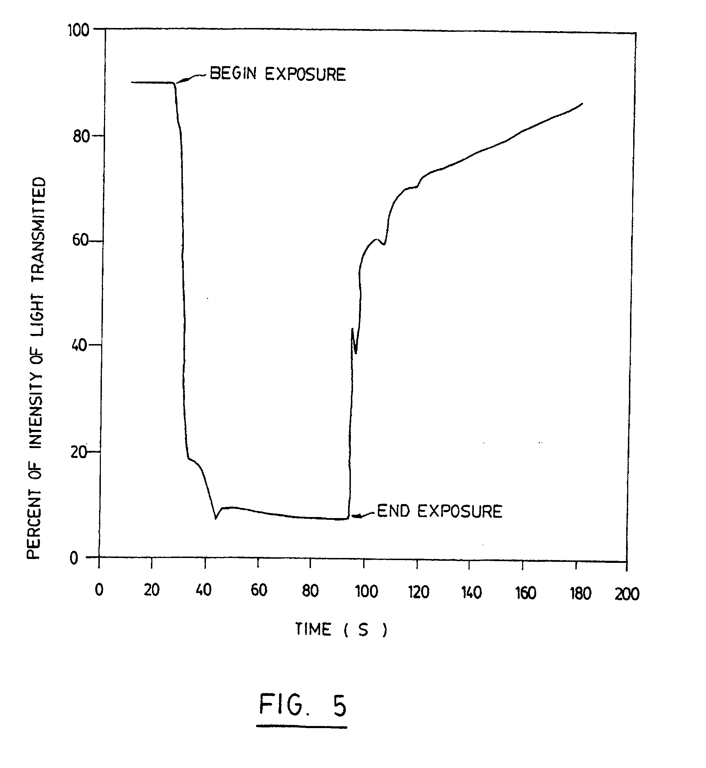

To verify the response of the indicator 1 to vapors of solvents, the indicator 1 was placed in a hermetic box in the presence of an open container containing the solvent. The indicator 1 was thus exposed at concentrations that are relatively high equal to those pressures of vapor of the solvents used. Figure 5 illustrates the results with a fiber 10 in the presence of acetone. The response of the indicator 1 is very quick as can be seen from this Figure 5. The recuperating period is also relatively quick but demonstrates a behaviour that is much more complex but is reproducible, at least for the few tries that we have made.

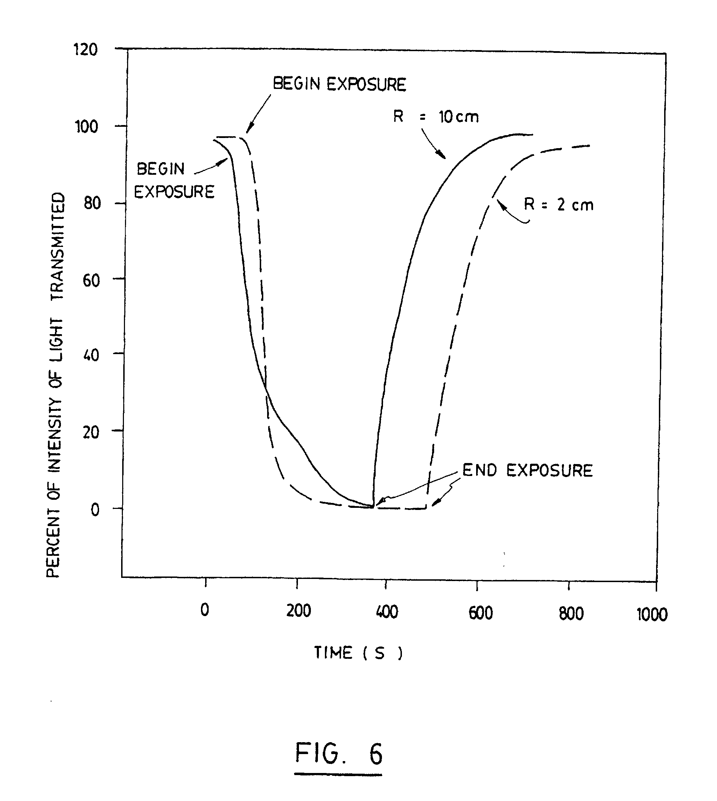

Figure 6 illustrates the result in the presence of toluene. Here, it is not the choice of the solvent that is significant as the indicator reacts with all of those that we have tested (methanol, isopropanol, etc.). This graphic illustrates however the variation of response in function of the curvature of the fiber. With a radius of curvature of 2 cm, the indicator responds more rapidly than with a radius of curvature of 10 cm and is thus more sensitive.

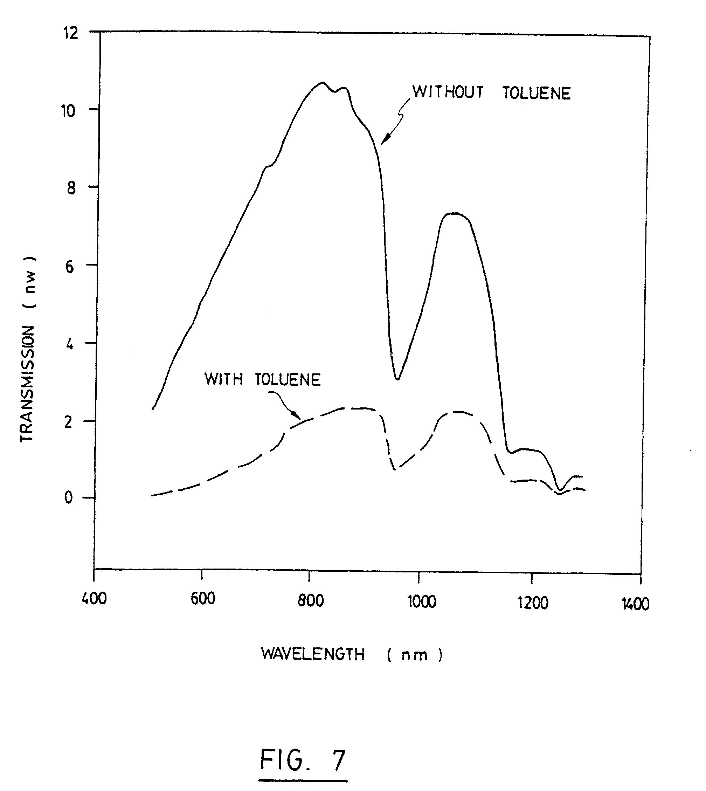

The majority of other approaches which use an optical fiber for chemical detection are very selective and the wavelength that is used is a function of the contaminant that one wishes to detect. On the contrary, the response of our indicator 1 is in principle independent of the wavelength used and is non-selective. It is an important advantage that required verification. In order to do so, the light emitting diode (i.e. light source 31) was replaced by a white wide-band source and the output of the fiber was sent to a spectral analyzer. The results of these measurements are illustrated on Figure 7. As expected, there is no specific wavelength at which the indicator does not function. The indicator

* scanning electron microscope
 * BET: Braunauer, Emmett and Teller technique

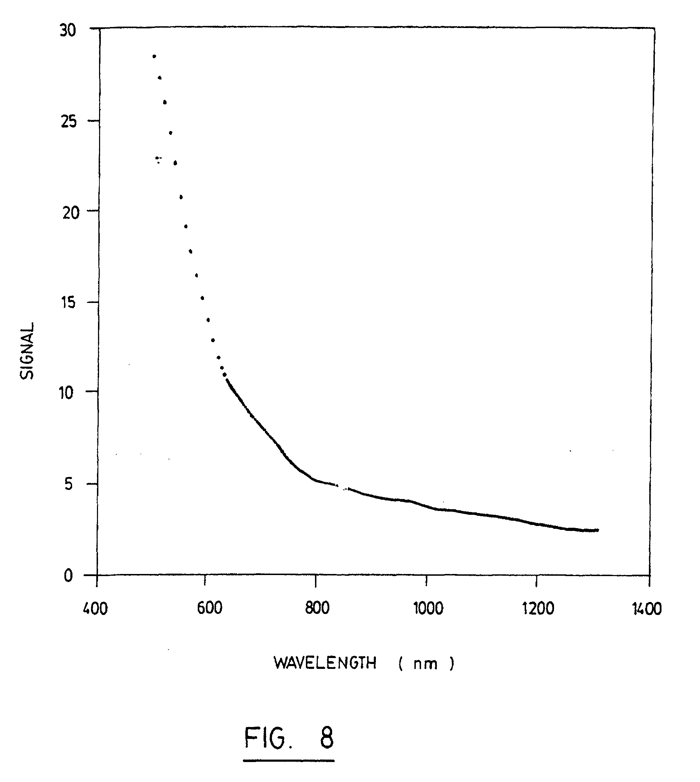

reacts at all wavelengths. However, the response of the fiber is greater at a shorter wavelength because the guiding properties of the fiber are in function of the wavelength as shown on Fig. 8. The results of Fig. 8 are obtained by plotting the ratio of the transmission without toluene over the transmission with toluene as a function of wavelength.

Finally, an ageing phenomenon of the fiber has been observed even though quantitive measures on this topic are not available. It is clear that the sensitivity of the fiber diminishes gradually with time if it is left exposed without protection to ambient humidity. The fibers that were used for testing lost the majority of their sensitivity after two months. It is a phenomenon that has been observed for activated carbon ("Degradation in the Performance of Activated Carbon Filters and How to Overcome the Problem", Journal of the International Society for Respiratory Protection, Summer 1992) and which comes from chemisorption of oxygen and/or water vapors. It is a phenomenon that is also observed for porous glass and there exists efficient treatments to overcome this problem.

The above experiment shows that the potential of an indicator 1 with an optical fiber 10 having a porous cladding 11 works. The results obtained are very encouraging.

We have demonstrated that it is possible to conceive and manufacture an optical fiber indicator 1 that is very simple and potentially at low-cost. This indicator 1 reacts quickly to the presence of solvents and may be a very good candidate. However, the experiments have dealt mostly with concentrations of solvents that are very high and for very short exposition periods.

We already know that a shorter wavelength, a longer porous section, and a thinner cladding may increase the sensitivity of the indicator. But it is also possible that a volume of pores that may be different, surface treatment or tighter curvature may also increase the performance of the apparatus.

Although the present invention has been explained hereinabove by way of a preferred embodiment thereof, it should be pointed out that any modifications to this preferred embodiment within the scope of the appended claims is not deemed to alter or change the nature and scope of the present invention.

## Claims

1. A combination of an end-of-service indicator (1) and a respirator cartridge (100), said respirator cartridge having a gas/vapor sorbent (101);

   said end-of-service indicator comprising detecting means for detecting a level of saturation of said gas/vapor sorbent surrounding said indicator and an alarm operatively connected to said detecting means, said alarm being triggered when said gas/vapor sorbent is saturated beyond a predetermined level;

   **characterized in that**:

   said detecting means comprise an optical fiber (10) having two opposite extremities (21,23), one of said extremities (21) being connected to a light source (31), the other (23) of said extremities being connected to a detector (41), said detector being adapted to measure the intensity of light transmitted by said fiber (10) wherein at least a portion of said fiber (10) is porous, the pores of said porous section being properly adjusted to fill up through adsorption when the gas/vapor sorbent is saturated;

   said portion of said fiber (10) that is porous adsorbs gas and vapor when the gas/vapor sorbent is saturated thereby increasing the index of refraction of the portion of the fiber that is porous as a function of the volume of pores that are saturated by the gas/vapor, lowering the transmission properties of the fiber, thereby triggering the alarm when the gas/vapor sorbent is saturated and thus the intensity of light measured by the detector falls below a predetermined level.

2. A combination according to claim 1, wherein said fiber (10) has a cladding (11) and a core (13) and said at least one portion of said optical fiber (10) that is porous is said cladding (11).

3. A combination according to claim 1, wherein said fiber (10) has a cladding (11) and a core (13) and said at least one portion of said optical fiber (10) that is porous is said cladding (11) and said core (13).

4. A combination according to claim 2, wherein said optical fiber (10) further includes a polymer coating (15).

5. A combination according to claim 1, wherein said at least one portion of said optical fiber (10) that is porous has a length of approximately 2 cm.

6. A combination according to any one of claims 1 to 5, wherein said optical fiber (10) is straight.

7. A combination according to any one of claims 1, 2 or 4, wherein at least one portion of said fiber (10) is cork-screwed.

8. A combination according to any one of claims 1 to 7, wherein:

> said light source is a LED (D2);
> said detector includes a light sensor (Q1), having an output which is operatively connected to an amplifier, said amplifier being operatively connected to a voltage-frequency converter; and
> said alarm (51) is a LED (D1).

**Patentansprüche**

1. Kombination aus einer Erschöpfungsanzeige (1) und der Filterpatrone (100) eines Atemschutzgeräts, die ein Gas/Dampf-Sorptionsmittel (101) besitzt, wobei die Erschöpfungsanzeige ein Mittel für den Nachweis des Sättigungsgrades des diese Anzeige umgebenden Gas/Dampf-Sorptionsmittels und einen Alarm umfasst, der betriebsbereit mit dem Nachweismittel verbunden ist und ausgelöst wird, wenn dieses Gas/Dampf-Sorptionsmittel über einen festgelegten Grad hinaus gesättigt ist, **dadurch gekennzeichnet, dass**
das Nachweismittel eine Faseroptik (10) mit zwei einander gegenüberliegenden Enden (21, 23) umfasst, wobei ein Ende (21) an eine Lichtquelle (31) und das andere (23) an einen Detektor (41) angeschlossen ist, der zur Messung der von der Faseroptik (10) übertragenen Lichtstärke geeignet ist, wenigstens ein Teil dieser Faseroptik (10) porös ist, die Poren dieses porösen Teils auf geeignete Weise eingestellt sind, um durch Adsorption aufgefüllt zu werden, wenn das Gas/Dampf-Sorptionsmittel gesättigt ist, und dieser poröse Teil der Faseroptik (10) Gas und Dampf adsorbiert, wenn das Gas/Dampf-Sorptionsmittel gesättigt ist, wodurch der Brechungsindex des porösen Teils der Faseroptik in Abhängigkeit von dem vom Gas/Dampf gesättigten Porenvolumen erhöht wird, die Transmissionseigenschaften der Faseroptik verschlechtert werden und der Alarm ausgelöst wird, wenn das Gas/Dampf-Sorptionsmittel gesättigt ist und damit die vom Detektor gemessene Lichtstärke unter ein festgelegtes Maß sinkt.

2. Kombination nach Anspruch 1, wobei die Faseroptik (10) eine Ummantelung (11) und einen Kern (13) besitzt und der wenigstens eine Teil dieser Faseroptik (10), der porös ist, die Ummantelung (11) ist.

3. Kombination nach Anspruch 1, wobei die Faseroptik (10) eine Ummantelung (11) und einen Kern (13) besitzt und der wenigstens eine Teil der Faseroptik (10), der porös ist, diese Ummantelung (11) und dieser Kern (13) ist.

4. Kombination nach Anspruch 2, wobei die Faseroptik (10) außerdem eine Polymerbeschichtung (15) umfasst.

5. Kombination nach Anspruch 1, wobei der wenigstens eine Teil der Faseroptik (10), der porös ist, eine Länge von etwa 2 cm besitzt.

6. Kombination nach einem der Ansprüche 1 bis 5, wobei die Faseroptik (10) gerade ist.

7. Kombination nach einem der Ansprüche 1, 2 oder 4, wobei wenigstens ein Teil der Faseroptik (10) schraubenförmig ist.

8. Kombination nach einem der Ansprüche 1 bis 7, wobei die Lichtquelle eine LED (D2) ist, der Detektor einen Lichtsensor (Q1) mit einem Ausgang umfasst, der betriebsbereit an einen Verstärker angeschlossen ist, der wiederum betriebsbereit an einen Spannungs-Frequenz-Umwandler angeschlossen ist, und der Alarm (51) eine LED (D1) ist.

**Revendications**

1. Combinaison d'un indicateur (1) de fin de service et d'une cartouche (100) respiratoire, ladite cartouche respiratoire ayant un sorbant (101) de gaz/vapeur,
ledit indicateur de fin de service comprenant des moyens de détection pour détecter un niveau de saturation dudit sorbant de gaz/vapeur entourant ledit indicateur et une alarme reliée fonctionnellement auxdits moyens de détection, ladite alarme étant déclenchée quand ledit sorbant de gaz/vapeur est saturé au-delà d'un niveau prédéterminé ;
**caractérisée en ce que** :

> lesdits moyens de détection comprennent une fibre optique (10) ayant deux extrémités opposées (21, 23), l'une (21) desdites extrémités étant reliée à une source lumineuse, l'autre (23) desdites extrémités étant reliée à un détecteur (41), ledit détecteur étant conçu pour mesurer l'intensité de la lumière transmise par ladite fibre (10), dans lequel au moins une portion de ladite fibre (10) est poreuse, les pores de ladite section poreuse étant ajustés de manière appropriée pour se remplir par adsorption quand le sorbant de gaz/vapeur est saturé ; ladite portion de ladite fibre (10) qui est poreuse adsorbe du gaz et de la vapeur quand le sorbant de gaz/vapeur est saturé, ce qui augmente ainsi l'indice de réfraction de la portion de la fibre qui est poreuse en fonction du volume de pores qui sont saturés par le gaz/vapeur, diminue les propriétés de transmission de la fibre, déclenchant ainsi l'alarme lorsque le sorbant de gaz/vapeur est saturé et que l'intensité de la lumière mesurée par le détecteur tombe au-dessous d'un niveau prédéterminé.

2. Combinaison selon la revendication 1, dans laquelle ladite fibre (10) a une gaine (11) et une âme (13), et ladite au moins une portion de ladite fibre optique (10) qui est poreuse est ladite gaine (11).

3. Combinaison selon la revendication 1, dans laquelle ladite fibre (10) a une gaine (11) et une âme (13), et ladite au moins une portion de ladite fibre optique (10) qui est poreuse est ladite gaine (11) et ladite âme (13).

4. Combinaison selon la revendication 2, dans laquelle ladite fibre optique (10) comprend en outre un revêtement (15) en polymère.

5. Combinaison selon la revendication 1, dans laquelle ladite au moins une portion de ladite fibre optique (10) qui est poreuse a une longueur d'environ 2 cm.

6. Combinaison selon l'une quelconque des revendications 1 à 5, dans laquelle ladite fibre optique (10) est rectiligne.

7. Combinaison selon l'une quelconque des revendications 1, 2 ou 4, dans laquelle ladite au moins une portion de ladite fibre optique (10) est en tire-bouchon.

8. Combinaison selon l'une quelconque des revendications 1 à 7, dans laquelle ladite source lumineuse est une diode électroluminescente (D2) ;
   ledit détecteur comprend un capteur (Q1) de lumière ayant une sortie qui est reliée fonctionnellement à un amplificateur, ledit amplificateur étant relié fonctionnellement à un convertisseur tension-fréquence ; et
   ladite alarme (51) est une diode électroluminescente (D1).

FIG. 1

FIG. 2

FIG. 3

FIG. 4

FIG. 5

FIG. 6

FIG. 7

FIG. 8

FIG. 9a

9V ZERO ADJUSTMENT

R10 1k

C4 10uF

C5 .01uF

C6 .22uF

R8 39k

R2 10k

9V

R9 330

SE 3470-3

D2

9V

R1 510k

Q1 SD 5443-3

6
5
4 U1B
7
8

LM 358N

9V

R3 100k

9V

R5 5k

C1 .1uF

C3 10uF

U2
7 IN R/C OUT 1
2 5 REF FREQ THRES 3
6

LM 331N

R7 2k

R4 100k

C2 10uF

9V

R6 680

51

D1 LED

EP 1 032 823 B1

FIG. 9b

FIG. 10

GAS / VAPOR 70

21
101
10
23
100

FIG. 11

100
21
10
23

FIG. 12